# FASCICULE DE BREVET EUROPEEN

(11) **EP 2 080 994 B1**
(45) Date de publication et mention de la délivrance du brevet: **31.08.2011**
(21) Numéro de dépôt: 08171689.6
(22) Date de dépôt: 15.12.2008
(51) Int. Cl.: G01D 11/30

(54) **Support amovible pour matériel de mesure**
Abnehmbares Gestell für Messgerät
Removable support for measurement equipment

(30) Priorité: 15.01.2008 FR 0850212
(43) Date de publication de la demande: 22.07.2009
(73) Titulaire: PEUGEOT CITROËN AUTOMOBILES SA, 78140 Velizy-Villacoublay (FR)
(72) Inventeur: Thomas, Alex, 90400, BOTANS (FR)
(74) Mandataire: Allain, Laurent

(56) Documents cités:
- EP-A- 0 541 811
- DE-U1- 29 913 722
- US-A1- 2006 097 117
- US-A1- 2006 175 524
- US-A1- 2007 235 616

## Description

La présente invention concerne un support pour un matériel de mesure, destiné à des moyens d'assemblage d'une ligne de ferrage de véhicules automobiles, le support étant relié au sol à proximité des moyens d'assemblage.

Il est connu qu'une ligne de ferrage de véhicules automobiles, c'est-à-dire d'assemblage des éléments de carrosserie, comprend des moyens d'assemblage sur lesquels sont positionnées des pièces constituant une partie de la structure du véhicule automobile.

II est connu, sur une ligne de ferrage, de suivre la conformité des moyens d'assemblage par des opérations de mesure de différents points d'appui, à intervalles réguliers.

Pour cela, plusieurs supports fixes sont implantés à proximité des moyens d'assemblage pour la mise en place de matériels de mesure. La position des supports engendre un encombrement permanent qui gêne l'accessibilité à certaines zones, par exemple pour positionner des pièces dans les moyens d'assemblage, ou pour le passage d'une pince à souder, ou encore pour les trajectoires de robots pour la prise des pièces une fois assemblées.

Une solution consiste à démonter le support fixe et à le laisser au sol près des moyens d'assemblage. Cependant, cette solution est coûteuse en temps en raison des multiples systèmes de fixation à démonter, et peut être dangereuse pour la sécurité des opérateurs en bord de ligne.

La demande de brevet US 2007/235616 se rapporte à un support adapté à supporter un matériel de mesure destiné à des moyens d'assemblage d'une ligne de ferrage de véhicules automobiles.

L'invention a pour but de concevoir un support pour un matériel de mesure ne générant pas de problèmes d'accessibilité sur les moyens d'assemblage tout en garantissant la sécurité des opérateurs.

Pour cela, l'invention a pour objet un support pour matériel de mesure du type précité, comportant au moins
- une embase fixée au sol de manière amovible,
- un poteau, distinct de l'embase, solidarisé à celle-ci de manière amovible, le poteau comprenant une extrémité supérieure apte à supporter un matériel de mesure, caractérisé en ce que
- l'embase comprend une partie mâle en saillie par rapport au sol, le poteau comprend une extrémité inférieure configurée en une partie femelle en prise avec la partie mâle de l'embase, et des moyens de solidarisation amovibles sont rapportés extérieurement et maintiennent de manière fixe le poteau par rapport au sol.

Selon d'autres caractéristiques :
- le poteau s'étend sensiblement verticalement par rapport au sol ;
- un dispositif de fixation à vis unique solidarise l'embase au sol ;
- le support comprend en outre une tête de liaison solidarisée à l'extrémité supérieure du poteau de manière amovible, la tête étant destinée à supporter un matériel de mesure ;
- la tête de liaison comprend une partie mâle en prise avec l'extrémité supérieure du poteau, configurée en partie femelle, et des moyens de solidarisation amovibles rapportés extérieurement maintiennent de manière fixe la tête de liaison par rapport au poteau ;
- le poteau, de forme tubulaire à section transversale intérieure circulaire, s'étend suivant un axe longitudinal, et l'embase est une pièce de révolution suivant ledit axe longitudinal et dont la section transversale la plus grande est complémentaire de celle du poteau.

La présente invention concerne également une ligne de ferrage de véhicules automobiles, du type comprenant des moyens d'assemblage, au moins un matériel de mesure et au moins un support pour le ou chaque matériel de mesure tel que décrit ci-dessus, ce support étant relié au sol à proximité des moyens d'assemblage.

Selon une autre caractéristique, le matériel de mesure est un bras de mesure articulé, en particulier à articulations multiples.

L'invention et ses avantages seront mieux compris à la lecture de la description qui va suivre donnée uniquement à titre d'exemple et faite en se référant aux dessins annexés, sur lesquels :
- la figure 1 est une vue en perspective montrant un support selon l'invention équipé d'un matériel de mesure ;
- la figure 2 est une vue en coupe longitudinale du support de la figure 1.

Les termes d'orientation, en particulier « inférieur(e) » et « supérieur(e) », « haut » et « bas », utilisés dans la suite de la description se rapportent à un axe vertical orienté de bas en haut.

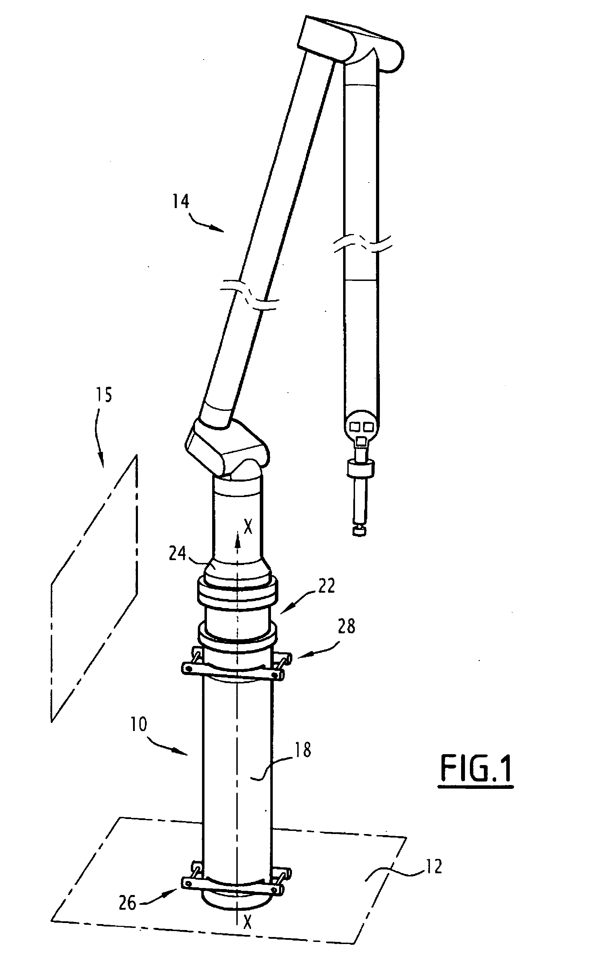

Sur la figure 1, est représenté un support 10 relié à un marbre formant le sol 12, support sur lequel est monté un matériel de mesure 14, en particulier un bras articulé à articulations multiples.

Le support 10 est implanté à proximité de moyens d'assemblage d'une ligne de ferrage d'un véhicule automobile, schématisés en 15.

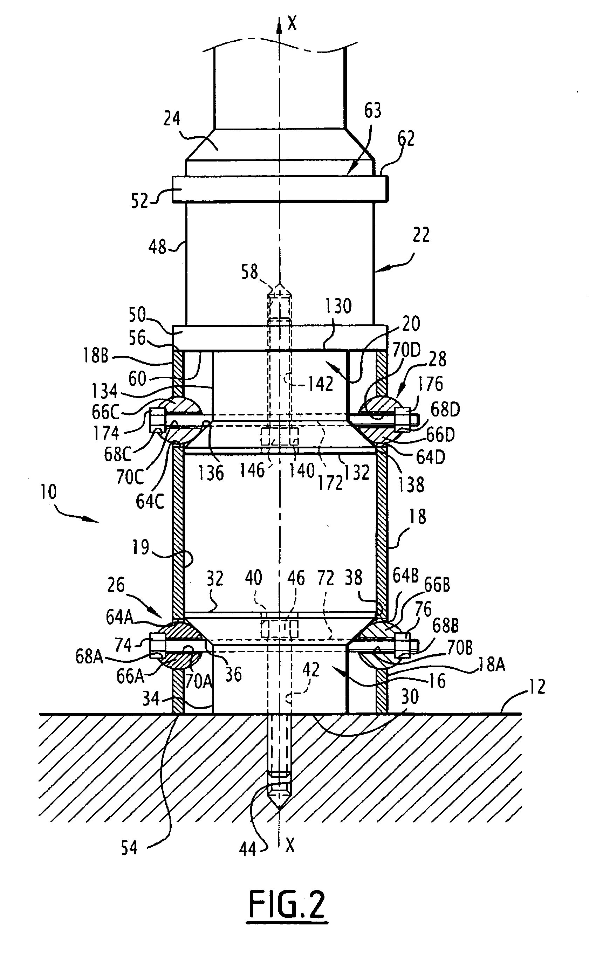

Le support 10 s'étend sensiblement verticalement par rapport au sol 12 selon un axe longitudinal X-X. Il comprend une embase 16 (figure 2) au moins partiellement en saillie par rapport au sol 12, fixée à celui-ci de manière amovible, et un poteau tubulaire 18, distinct de l'embase 16, s'étendant suivant l'axe X-X.

En partie supérieure du support 10, une pièce de liaison 20 (figure 2) relie le poteau 18 et une tête de liaison 22, cette dernière supportant la base 24 du matériel de mesure 14.

Des moyens de solidarisation respectifs inférieurs 26 et supérieurs 28 solidarisent respectivement le poteau 18 au sol 12 par l'intermédiaire de l'embase 16, et la tête 22 au poteau 18 par l'intermédiaire de la pièce de liaison 20.

Sur la figure 2, l'embase 16 est une pièce de révolution autour de l'axe X-X délimitée par une face inférieure 30, en contact avec le sol 12, et une face supérieure 32, les faces 30 et 32 étant disposées sensiblement perpendiculairement à l'axe longitudinal X-X.

L'embase 16 comprend, à partir du sol 12, un tronçon 34 en cylindre droit s'étendant sensiblement parallèlement à l'axe X-X sur plus de la moitié de la hauteur de l'embase 16.

Le tronçon 34 se prolonge vers le haut en un tronçon tronconique divergent 36, puis en un tronçon cylindrique droit 38 de faible hauteur jusqu'à la face d'extrémité 32.

Un lamage 40 est réalisé dans la face supérieure 32, lequel lamage est prolongé par un perçage 42 débouchant dans la face inférieure 30. Le lamage 40 et le perçage 42 s'étendent suivant l'axe X-X. Un trou borgne taraudé 44 est réalisé suivant l'axe X-X dans le sol 12 de manière qu'une vis à tête 46 introduite depuis la face 32 fixe solidement ladite embase au sol.

Le poteau 18 comprend une extrémité inférieure 18A reposant au sol et une extrémité supérieure 18B distante du sol, cette dernière étant apte à supporter le matériel de mesure 14. Le poteau 18 présente une paroi intérieure 19.

Dans sa région d'extrémité inférieure 18A, le poteau 18 forme une partie femelle qui entoure le tronçon droit 34 de l'embase 16 avec un large jeu, l'embase 16 formant une partie mâle en saillie par rapport au sol 12.

Dans sa région d'extrémité supérieure 38, l'embase 16 comprend une forme extérieure complémentaire de la forme intérieure du poteau 18, si bien que l'embase 16 maintient le poteau 18 par rapport au sol 12 de manière amovible.

La pièce de liaison 20 est disposée intérieurement à l'extrémité 18B du poteau 18. Dans l'exemple représenté, l'embase 16 et la pièce de liaison 20 sont identiques et disposées tête-bêche l'une par rapport à l'autre, c'est-à-dire en opposition suivant l'axe X-X.

La pièce de liaison 20 reprend les références numériques de l'embase 16 augmentées de cent. La pièce de liaison 20 comporte ainsi un tronçon droit cylindrique supérieur 134 et un tronçon droit cylindrique inférieur 138 entourant un tronçon intermédiaire tronconique 136 s'évasant radialement extérieurement en direction du sol 12.

Dans sa région d'extrémité supérieure 18B, le poteau 18 forme une partie femelle qui entoure le tronçon droit 134 de la pièce de liaison 20 avec un large jeu.

Dans sa région d'extrémité inférieure 138, la pièce de liaison 20 comprend une forme extérieure complémentaire de la forme intérieure du poteau 18, si bien que la pièce de liaison 20 maintient la tête 22 au poteau 18 de manière amovible.

La tête de liaison 22 comprend un tronçon 48 de forme générale cylindrique délimité par une base inférieure 50 et une base supérieure 52.

Le poteau 18 comprend une face d'extrémité inférieure 54 au contact avec le sol 12 et une face d'extrémité supérieure 56.

La base inférieure 50 de la tête de liaison 22 est en appui sur la face d'extrémité 56 du poteau 18. La tête 22 comporte un trou borgne taraudé 58 disposé suivant l'axe X-X à partir de sa face inférieure 60.

Une vis à tête 146 est engagée dans le lamage 140 et le perçage 142 de la pièce de liaison 20 à partir de la face 132 de la pièce de liaison 20. La pièce 20 est ainsi reliée solidement à la tête de liaison 22.

La face supérieure 62 de la tête de liaison 22 reçoit la base 24 du bras articulé 14 de manière à permettre à la base 24 de tourner autour de l'axe longitudinal X-X, grâce à des moyens de liaison appropriés 63.

Le poteau tubulaire 18 comprend en outre une paire de fentes inférieures parallèles et horizontales 64A et 64B et une paire de fentes supérieures parallèles et horizontales 64C et 64D, disposées respectivement près des extrémités inférieure 18A et supérieure 18B du poteau. Le poteau 18 étant de forme tubulaire à section transversale circulaire, les fentes 64A, 64B, 64C et 64D débouchent à l'intérieur du poteau 18. Les fentes inférieures 64A, 64B et supérieures 64C et 64D sont respectivement diamétralement opposées deux à deux.

Les fentes inférieures 64A, 64B sont en regard du tronçon tronconique 36, de l'embase 16, et les fentes supérieures 64C, 64D sont en regard du tronçon tronconique 136 de la pièce de liaison 20.

Les moyens de solidarisation inférieurs 26 et supérieurs 28 comprennent respectivement une paire de rondins inférieurs 66A, 66B et une paire de rondins supérieurs 66C, 66D, de longueur supérieure au diamètre extérieur du poteau 18, de sorte que les deux extrémités de chaque rondin 66A, 66B, 66C et 66D dépassent de part et d'autre du poteau 18.

Les rondins 66A, 66B, 66C et 66D s'étendent longitudinalement sensiblement suivant une direction perpendiculaire à l'axe X-X lorsqu'ils sont positionnés dans les fentes respectives associées 64A, 64B, 64C et 64D.

Un lamage respectif 68A, 68B, 68C et 68D prolongé d'un perçage respectif traversant 70A, 70B, 70C et 70D est agence, respectivement, à chaque extrémité des rondins 66A, 66B, 66C et 66D selon un axe perpendiculaire à l'axe longitudinal de chacun des rondins.

Les moyens de solidarisation inférieurs 26 et supérieurs 28 comprennent également respectivement deux tirants inférieurs 72 et deux tirants supérieurs 172 qui coopérent respectivement avec la paire de rondins inférieurs 66A, 66B et la paire de rondins supérieurs 66C, 66D.

Les tirants inférieurs 72 et supérieurs 172 relient, extérieurement par rapport au poteau tubulaire 18, les extrémités de la paire respectivement de rondins inférieurs 66A, 66B et de rondins supérieurs 66C, 66D dépassant d'un même côté du poteau 18.

Le fonctionnement des moyens de solidarisation inférieurs 26 va être décrit maintenant.

Au niveau de la paire de rondins inférieurs 66A et 66B, la tête 74 d'une vis est logée dans le lamage 68A d'une première extrémité du premier rondin 66A, la tige filetée 72 de la vis traversant le perçage 70A associé de la première extrémité du premier rondin. L'extrémité de la tige filetée 72 traverse successivement le perçage 70B et le lamage 68B d'une première extrémité du deuxième rondin 66B en regard de la première extrémité du premier rondin 66A. Un écrou 76 est vissé sur l'extrémité de la tige filetée 72 de la vis, l'écrou étant logé dans le lamage 68B associé de la première extrémité du deuxième rondin 66B.

Lors de la phase de fixation du support 10 par rapport au sol 12, un effort exercé sur les tirants 72 provoque le mouvement de la paire de rondins inférieurs 66A et 66B vers l'intérieur du poteau tubulaire 18. En conséquence, la surface extérieure des rondins 66A et 66B vient en contact ponctuellement avec le tronçon tronconique 36 de l'embase 16, tout en étant en appui sur la paroi de la fente respective 64A, 64B associée.

Ainsi, la face 54 du poteau tubulaire 18 a tendance à se rapprocher de plus en plus du sol 12, l'embase 16 étant fixe par rapport au sol 12. Les jeux fonctionnels étant rattrapés, le poteau 18 est fixé par rapport au sol par l'intermédiaire de l'embase 16. Cette solidarisation est réversible.

De façon similaire, une traction exercé sur les tirants supérieurs 172 provoque le rapprochement des rondins supérieurs 66C et 66D vers l'intérieur du poteau tubulaire 18 au niveau de la pièce de liaison 20. La surface extérieure des rondins 66C et 66D vient en contact avec le profil conique 136 de la pièce de liaison 20. La tête de liaison 22 étant en appui sur la face 56 d'extrémité du poteau tubulaire 18, les rondins supérieurs 66C et 66D ont tendance à remonter le long de la face inclinée du profil 36 de la pièce de liaison 20 pour venir en contact avec la paroi latérale de la fente supérieure respective 64C, 64D associée.

Il en résulte que la pièce de liaison 20 et la tête de liaison 22 ont tendance à être déplacées, d'un seul tenant, vers le sol 12. Une fois tous les jeux fonctionnels rattrapés, la tête de liaison 22, reliée solidement à la pièce de liaison 20, est solidarisée par rapport au poteau 18.

Ainsi, le poteau 18 équipé de la tête de liaison 22 est facilement amovible par rapport à l'embase 16, elle-même fixée au sol. De plus, le mode de fixation à vis unique de l'embase 16 par rapport au sol 12 permet un montage et un démontage rapide de celle-ci rapport au sol, cet agencement rendant l'embase 16 facilement amovible.

La ligne de ferrage du véhicule automobile équipé de moyens d'assemblage et de matériel de mesure maintenu sur un support tel que décrit ci-dessus est accessible de manière optimale. L'espace libéré par le support amovible permet un meilleur accès pour assembler les pièces sur les moyens d'assemblage.

Grâce à l'invention, un seul support amovible sert pour la mesure de tous les moyens d'assemblage d'une ligne de ferrage de véhicules automobiles.

## Revendications

1. Support (10) pour un matériel de mesure (14) destiné à des moyens d'assemblage (15) d'une ligne de ferrage de véhicules automobiles, le support (10) étant relié au sol (12) à proximité des moyens d'assemblage (15), et comportant au moins :
- une embase (16) fixée au sol (12) de manière amovible,
- un poteau (18), distinct de l'embase (16), solidarisé à celle-ci de manière amovible, le poteau (18) comprenant une extrémité supérieure (18B) apte à supporter un matériel de mesure (14),
**caractérisé en ce que** l'embase (16) comprend une partie mâle (34, 36 ,38) en saillie par rapport au sol (12), **en ce que** le poteau (18) comprend une extrémité inférieure (18A) configurée en une partie femelle (19) en prise avec la partie mâle de l'embase (16), et **en ce que** des moyens de solidarisation (26) amovibles sont rapportés extérieurement et maintiennent de manière fixe le poteau (18) par rapport au sol (12).

2. Support selon la revendication 1, **caractérisé en ce que** le poteau (18) s'étend sensiblement verticalement par rapport au sol (12).

3. Support selon la revendication 1 ou 2, **caractérisé en ce qu'**un dispositif de fixation (40, 42, 44, 46 ; 58, 140, 142, 146) à vis unique solidarise l'embase (16) au sol (12).

4. Support selon l'une quelconque des revendications 1 à 3, **caractérisé en ce que** le support (10) comprend en outre une tête de liaison (22) solidarisée à l'extrémité supérieure (18B) du poteau (18) de manière amovible, la tête (22) étant destinée à supporter un matériel de mesure (14).

5. Support selon la revendication 4, **caractérisé en ce que** la tête de liaison (22) comprend une partie mâle (134, 136, 138) en prise avec l'extrémité supérieure (18B) du poteau (18), configurée en partie femelle, et **en ce que** des moyens de solidarisation (28) amovibles rapportés extérieurement maintiennent de manière fixe la tête de liaison (22) par rapport au poteau (18).

6. Support selon l'une quelconque des revendications précédentes, **caractérisé en ce que** le poteau (18), de forme tubulaire à section transversale intérieure circulaire, s'étend suivant un axe longitudinal (X-X), et **en ce que** l'embase (16) est une pièce de révolution suivant ledit axe longitudinal et dont la section transversale la plus grande est complémentaire de celle du poteau (18).

7. Ligne de ferrage de véhicules automobiles, du type comprenant des moyens d'assemblage (15), au moins un matériel de mesure (14) et au moins un support (10) pour le ou chaque matériel de mesure selon l'une quelconque des revendications 1 à 6, ce support étant relié au sol à proximité des moyens d'assemblage (15).

8. Ligne de ferrage selon la revendication 7, **caractérisé en ce que** le matériel de mesure (14) est un bras de mesure articulé, en particulier à articulations multiples.

## Claims

1. Support (10) for an item of measurement equipment (14) intended for assembly means (15) of an assembly line of motor vehicles, the support (10) being connected to the ground (12) close to the assembly means (15), and comprising at least :
- a base (16) fixed to the ground (12) in a removable manner,
- a post (18), distinct from the base (16), integrated therewith in a removable manner, the post (18) comprising an upper end (18B) able to support an item of measuring equipment (14),
**characterized in that** the base (16) comprises a male part (34, 36, 38), projecting with respect to the ground (12), **in that** the post (18) comprises a lower end (18A) configured as a female part (19) engaged with the male part of the base (16), and **in that** removable integration means (26) are added externally and hold the post (18) in a fixed manner with respect to the ground (12).

2. Support according to Claim 1, **characterized in that** the post (18) extends substantially vertically with respect to the ground (12).

3. Support according to Claim 1 or 2, **characterized in that** a fixing device (40, 42, 44, 46; 58, 140, 142, 146) with a single screw integrates the base (16) with the ground (12).

4. Support according to any one of Claims 1 to 3, **characterized in that** the support (10) further comprises a connecting head (22) integrated with the upper end (18B) of the post (18) in a removable manner, the head (22) being intended to support an item of measurement equipment (14).

5. Support according to Claim 4, **characterized in that** the connecting head (22) comprises a male part (134, 136, 138) engaged with the upper end (18B) of the post (18), configured as a female part, and **in that** removable integration means (28) added externally maintain the connecting head (22) in a fixed manner with respect to the post (18).

6. Support according to any one of the preceding claims, **characterized in that** the post (18), of tubular shape with interior circular transverse section, extends following a longitudinal axis (X-X), and **in that** the base (16) is a revolving part following the said longitudinal axis and the largest transverse section of which is complementary to that of the post (18).

7. Assembly line of motor vehicles, of the type comprising assembly means (15), at least one item of measurement equipment (14) and at least one support (10) for the or each item of measurement equipment according to any one of Claims 1 to 6, this support being connected to the ground close to the assembly means (15).

8. Assembly line according to Claim 7, **characterized in that** the item of measurement equipment (14) is an articulated measurement arm, in particular having multiple articulations.

## Patentansprüche

1. Träger (10) für ein Messmaterial (14), das für Fügemittel (15) einer Linie für Beschlagarbeiten für Kraftfahrzeuge bestimmt ist, wobei der Träger (10) mit dem Boden (12) in der Nähe der Fügemittel (15) verbunden ist und mindestens Folgendes aufweist:
- eine Basis (16), die auf dem Boden (12) abnehmbar befestigt ist,
- einen Ständer (18), der von der Basis (16) getrennt und mit dieser abnehmbar fest verbunden ist, wobei der Ständer (18) ein oberes Ende (18B) aufweist, das ein Messmaterial (14) tragen kann,
**dadurch gekennzeichnet, dass** die Basis (16) einen Steckteil (34, 36, 38), der in Bezug zu dem Boden (12) vorsteht, aufweist, dass der Ständer (18) ein unteres Ende (18A) aufweist, das als Buchsenteil (19) im Eingriff mit dem Steckteil der Basis (16) konfiguriert ist, und dass abnehmbare Mittel zum festen Verbinden (26) außen angebaut sind und den Ständer (18) in Bezug zu dem Boden (12) stationär halten.

2. Träger nach Anspruch 1, **dadurch gekennzeichnet, dass** sich der Ständer (18) im Wesentlichen vertikal in Bezug zu dem Boden (12) erstreckt.

3. Träger nach Anspruch 1 oder 2, **dadurch gekennzeichnet, dass** eine Befestigungsvorrichtung (40, 42, 44, 46; 58, 140, 142, 146) mit einer einzigen Schraube die Basis (16) auf dem Boden (12) fest befestigt.

4. Träger nach einem der Ansprüche 1 bis 3, **dadurch gekennzeichnet, dass** der Träger (10) ferner einen Verbindungskopf (22), der fest mit dem oberen Ende (18B) des Ständers (18) abnehmbar verbunden ist, aufweist, wobei der Kopf (22) dazu bestimmt ist, ein Messmaterial (14) zu tragen.

5. Träger nach Anspruch 4, **dadurch gekennzeichnet, dass** der Verbindungskopf (22) einen Steckteil (134, 136, 138) in Eingriff mit dem oberen Ende (18B) des Ständers (18), das als Buchsenteil konfiguriert ist, aufweist, und dass abnehmbare Mittel zum festen Verbinden (28), die außen angebaut sind, den Verbindungskopf (22) in Bezug zu dem Ständer (18) stationär halten.

6. Träger nach einem der vorhergehenden Ansprüche, **dadurch gekennzeichnet, dass** sich der Ständer (18) mit Röhrenform mit kreisförmigem Innenquerschnitt entlang einer Längsachse (X-X) erstreckt, und dass die Basis (16) ein Rotationsteil entlang der Längsachse ist und dessen größter Querschnitt zu dem des Ständers (18) komplementär ist.

7. Linie für Beschlagarbeiten von Kraftfahrzeugen, des Typs, die Mittel zum Zusammenfügen (15) aufweist, mindestens ein Messmaterial (14) und mindestens einen Träger (10) für das oder für jedes Messmaterial nach einem der Ansprüche 1 bis 6, wobei dieser Träger mit dem Boden in der Nähe der Zusammenfügemittel (15) verbunden ist.

8. Linie für Beschlagarbeiten nach Anspruch 7, **dadurch gekennzeichnet, dass** das Messmaterial (14) ein angelenkter Messarm ist, insbesondere mit mehreren Gelenken.
